# EUROPEAN PATENT SPECIFICATION

(11) **EP 3 430 298 B1**
(45) Date of publication and mention of the grant of the patent: **06.05.2020**
(21) Application number: 17715826.8
(22) Date of filing: 20.03.2017
(51) Int. Cl.: F16L 1/028, B26D 3/00, F16L 55/165

(54) **DEVICE AND METHOD FOR DEFORMING A CONDUIT**
VORRICHTUNG UND VERFAHREN ZUR VERFORMUNG EINER LEITUNG
DISPOSITIF ET PROCÉDÉ POUR DÉFORMER UN CONDUIT

(30) Priority: 18.03.2016 NL 2016455
(43) Date of publication of application: 23.01.2019
(73) Proprietor: Callidus Capital B.V., 8445 Heerenveen (NL)
(72) Inventor: KUIPERS, Albert Jan, 8445 PA Heerenveen (NL); PULL TER GUNNE, Erik Martijn, 8445 PA Heerenveen (NL); VAN DER PLAATS, Lieuwe Tjeerd, 8445 PA Heerenveen (NL); VEENSTRA, Feitze, 8445 PA Heerenveen (NL); VAN DALFSEN, Dirk Jan, 8445 PA Heerenveen (NL); STROET, Wilhelmus Hendrikus Cornelis, 8445 PA Heerenveen (NL); METZ, Anne Jan, 8445 PA Heerenveen (NL); STUIVER, Michel, 8445 PA Heerenveen (NL)
(74) Representative: V.O.
(86) International application number: PCT/NL2017/050173
(87) International publication number: WO 2017/160153

(56) References cited:
- CH-A5- 680 776
- DE-A1- 19 817 000
- US-A- 3 630 038
- US-A- 5 173 009
- US-A- 5 306 101
- US-A1- 2013 156 507
- US-A1- 2015 198 279

## Description

### TECHNICAL FIELD

The various aspects apply to the field of removal of conduits from a medium and removal of underground pipes in particular.

### BACKGROUND

With changes in substances used in industrial processes and further consumption of substances, systems for transportation of the substances change. One of such substances is natural gas. Changes in supply and demand and changes in locations of supply and demand in particular results in changes in distribution infrastructure. Certain pipes are not used anymore. Alternatively, pipes need to be replaced from a maintenance perspective. As the pipes are made out of high-quality steel or alloys or other materials, reclaiming the materials comprised by those pipes may be advantageous.

Removing pipes from the ground may be done by digging ditches and lifting the pipe. During life time of the pipe line infrastructure, buildings , trees and others are placed on top of the pipe line buried in the soil. And or Digging is not preferred because of agricultural, or environmental demands which don't allow to dig

Alternatively, pits are dug along the track of the piping at regular intervals and pipes are pulled from the ground. As frictional forces between the ground and the pipes are high, the intervals between the pits should be short.

US 2015/198279 A1, US 2013/156507 A1, US 5 173 009 A, CH 680 776 A5 and US 5 306 101 A each disclose a device for splitting, fracturing or cutting a pipe laid in the ground.

### SUMMARY

It is preferred to be able to place the pits further away than possible using conventional methods for removing underground piping.

A first aspect provides a device for establishing a non-destructive deformation of a conduit according to claim 1. Preferably, the device comprises a second deformation module provided between the first deformation module and the trailing end, the second deformation module comprising at least one deformation element extending outwardly from the body perpendicular to the centre axis, the deformation element defining a second deformation circle having a circle centre that substantially coincides with the centre axis and having a cross-section smaller than the first deformation circle.

By pulling the device through the conduit, like a pipe, and applying the specified forces, the conduit is deformed. In particular, the shape of the cross-section is deformed. More in particular, the cross-section of the conduit is enlarged in one direction by enlarging the cross-section dimension. With the conduit having a circularly shaped cross-section, the cross-section dimension is the diameter of the conduit. With a rectangular or square cross-section, the cross-section dimension may be a diagonal of the rectangle. Alternatively, the cross-section dimension may be substantially equal to the length of a side of the rectangle. More in general, the cross-section dimension may be the shortest possible length of a straight line through the centre of the conduit, from wall to wall of the conduit.

With for example only two - opposite - forces applied to a, for example, circular, conduit, the conduit will have an elliptical cross-section. This deformation may be elastic, plastic or a combination thereof. In case of an elastic deformation, the pipe resumes its shape prior to the deformation once applied forces are removed. In case of a plastic deformation, the pipe maintains its deformed shape after removal of forces that caused the deformation.

By applying a subsequent deformation by means of the second deformation module, the first deformation is at least partially undone. This may result for example in reinstating the initial circular cross-section and in any case in reduction of the cross-section enlarged by means of the first deformation. But with reduction of that cross-section, the medium does not necessarily flow back at its original location: voids are left. And in those voids, there is no contact between the outer surface of the conduit and the medium. And therefore, the amount of friction between the conduit and the medium is reduced.

More importantly, due to the deformations, bonding between the medium and the outer surface of the conduit is broken for at least part of the surface and preferably most of the surface. Such bonding may be due to hydrodynamic forces, mechanical forces, chemical bonds, other, or a combination thereof. Hence, the deformation results in less contact between the outer wall of the conduit and the medium as a result of creation of voids and/or breaking of bonds between the medium and the conduit. For breaking the bond, an elastic deformation of the cross-section of the conduit may be sufficient. As a result, less force is required for removing the conduit from the medium. Or with the same amount of force, a larger segment of the conduit may be removed from the medium. The latter option is advantageous, as compared to the state of the art, less pits are required for removing a stretch of conduit with the same force.

An embodiment of the device comprises a third deformation module provided between the first deformation module and the second deformation module, the third deformation module comprising at least two protrusions defining a third deformation circle having a diameter larger than the cross-section diameter, wherein the protrusions of the third deformation module are skewed over the centre axis relative to the protrusions of the first deformation module. This embodiment allows for creating of additional voids adjacent to the conduit, which results in a further reduction of the friction.

In another embodiment of the device, the first deformation module comprises a first deformation member and a second deformation member, the deformation members having a proximal deformation end connected to the body and a distal deformation end provided at a distance from the body, the deformation members being provided annularly and equidistantly spaced apart over the body centre axis.

In case of the first deformation module comprising two deformation members, the deformation members are spaced apart at 180 degrees, over the body centre axis. In case of three deformation members, the deformation members are spaced apart at 120 degrees and in case of five deformation members, the deformation members are spaced apart at 72 degrees over the body centre axis. This embodiment is relatively simple to manufacture and to use.

In a further embodiment, at least one of the deformation members is provided with a substantially circular rotation member that is rotatable mounted the distal deformation end of the at least one of the deformation members such that the rotation member extends beyond the distal deformation end, wherein the rotation axis of the rotation member is substantially perpendicular to the centre axis and substantially perpendicular to a line from the centre axis to the distal deformation end.

This embodiment reduces friction between the deformation members and the inner surface of the conduit.

In again another embodiment of the device, the second deformation module comprises a conically shaped deformation member having a cone axis that substantially coincides with the body centre axis, wherein the base of the conically shaped deformation member is provided towards the trailing end of the body.

This embodiment enables brining the cross-section of the conduit back in its original shape, in particular with a conduit having initially a circularly shaped cross-section.

A second aspect provides a method of reducing friction between a conduit and a medium surrounding the conduit as defined in claim 9.

Such method enables convenient removal of the conduit from the medium, as friction between the medium is reduced. The first deformation may be plastic, elastic or a combination thereof. In case of a substantially solely elastic first deformation, the second deformation is established by removing a force that established the first deformation. In case of a plastic deformation, the second deformation may be established by applying force to the conduit. A third aspect provides a method of removing a conduit from a medium as defined in claim 14. The method comprises the method according to the second aspect, executed by pushing or pulling a device according to the first aspect through the conduit; and removing the conduit from the medium by pulling and/or pushing the conduit relative to the medium.

### BRIEF DESCRIPTION OF THE DRAWINGS

The various aspects and embodiments thereof will now be described in detail in conjunction with drawings. In the drawings,
Figure 1: a tool for applying a deformation of a conduit;
Figure 2: a medium with a conduit comprised therein;
Figure 3 A: a cross-section of a pipe in the ground;
Figure 3 B: a cross-section of a deformed pipe in the ground;
Figure 3 C: a cross-section of a further deformed pipe in the ground;
Figure 3 D: a pipe in the ground with adjacent voids;
Figure 4 A: a cross-section of a pipe in the ground;
Figure 4 B: a cross-section of a deformed pipe in the ground;
Figure 4 C: a cross-section of a further deformed pipe in the ground;
Figure 4 D: a pipe in the ground with adjacent voids;
Figure 5 A: a construction site with an underground pipe being deformed;
Figure 5 B: a construction site with a lubricant injector;
Figure 5 C: a construction site with an underground pipe being pulled out of the ground;
Figure 5 D: a construction site with segments of a pipe and optionally refilled hole;
Figure 6 A: a construction site with an underground pipe being heated;
Figure 6 B: a construction site with a coating being scraped off;
Figure 7 A: a detail of a coating scraper and a detail of a pipe with a minor unevenness; and
Figure 7 B: a detail of the coating scraper and a detail of a pipe with a major unevenness.

### DETAILED DESCRIPTION

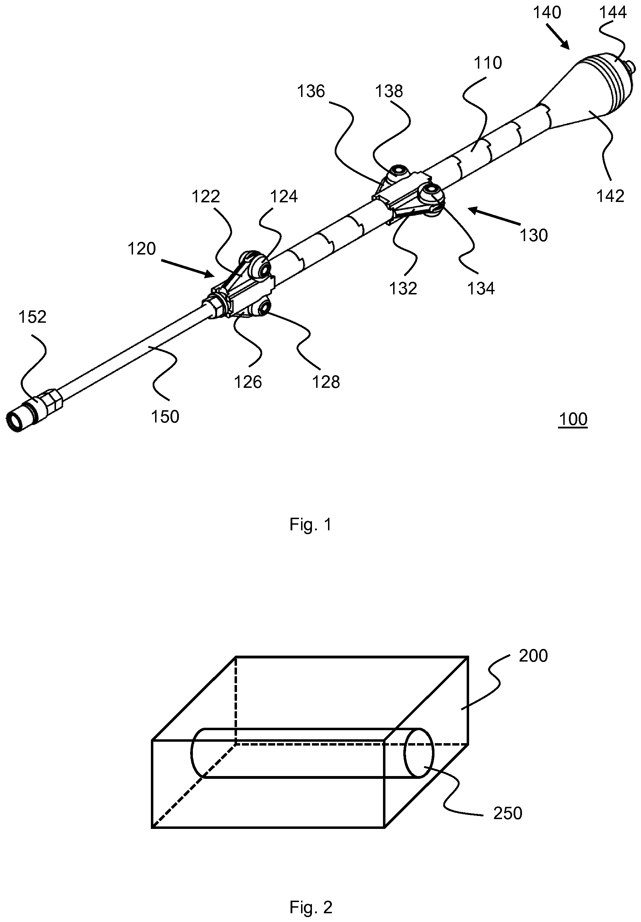

Figure 1 shows a device 100 for establishing a deformation of a conduit like a pipe. The device 100 comprises an elongated body 110. To the elongated body 110, a first deformation module 120, a third deformation module 130 and a second deformation module 140 are connected. In extension of the elongated body 110, a connection rod 150 is provided. At the end of the connection rod 150, not connected to the elongated body 110, a device connector 152 is provided. The device connector 152 is arranged to be connected to a pulling or towing arrangement. Such pulling or towing arrangement is arranged for pulling the device 100 through a pipe.

The first deformation module 120 comprises a first wedge 122 and a second wedge 126 as deformation members, protruding from the elongated body 110. The first wedge 122 is provided opposite to the second wedge 126. This means the wedges are equidistantly and annularly spaced over the centre axis of the elongated body 110. Together with the centre axis of the elongated body 110, the outer ends of the wedges define a first virtual circle.

The first wedge 122 is provided with a first rotational deformation member 124. The first rotational deformation member 124 comprises two guiding wheels. The two guiding wheels that are rotatable mounted to the first wedge 122 via common axle. The two guiding wheels extend beyond the outer end of the first wedge and are preferably provided in steel or another metal or metal alloy. Alternatively, plastic guiding blocks comprising for example polyethylene or another organic polymer may be provided for reducing friction between the inner wall of a pipe and the first deformation module 120. The second wedge 126 is provided with a second rotational deformation member 128 in an equivalent way.

The third deformation module 130 comprises a third wedge 132 and a fourth wedge 136 as deformation members. The third wedge 132 is provided opposite to the fourth wedge 136. This means the wedges are equidistantly and annularly spaced over the centre axis of the elongated body 110. Together with the centre axis of the elongated body 110, the outer ends of the wedges of the third deformation module define a second circle. The second virtual circle preferably has a diameter substantially equal to that of the first circle.

The third wedge 132 and the fourth wedge 136 are skewed 90 degrees over the centre axis of the body 110, relative to the first wedge 122 and the second wedge 126. A skew over another angle may be envisaged as well. For example, if yet an additional deformation module comprising wedges would be provided, wedges of the deformation modules could be skewed 60 degrees relative to one another.

The third wedge 132 is provided with a third rotational deformation member 134. The third rotational deformation member 134 comprises two guiding wheels. The two guiding wheels that are rotatable mounted to the third wedge 132 via common axle. The two guiding wheels extend beyond the outer end of the third wedge. The fourth wedge 136 is provided with a fourth rotational deformation member 138 in an equivalent way.

The second deformation module 140 comprises a conical member 142 and a cylindrical member 144. The second deformation module 140 and the conical member 142 in particular extend outwardly from the elongated body 110. The conical member 142 preferably has a circular diameter smaller than the first circle defined by the outer ends of the wedges of the first deformation module 120 and the centre axis of the body 110. In further embodiments, the second deformation module 140 has a different shape. Preferably, the second deformation member 140 has a shape substantially equal to the initial shape of the cross-section of the conduit that is to be deformed.

Figure 2 shows a pipe 250 as a conduit. The pipe 250 is buried in the ground 200 as a medium. The ground 250 may comprise clay, sand, other matter or a combination thereof, either dry or containing water. The ground 250 is compressible. The pipe 250 may comprise steel, predominantly comprising iron and optionally further metals and other materials. The ground 200 exerts a slightly compressive force on the pipe 250. This results in a considerable frictional force between the ground 200 and the pipe 250. This makes it very difficult or even impossible to pull the pipe 250 out of the ground 200.

The device 100 is arranged for applying deformations to the pipe 250. To this purpose, the device 100 is pulled through the pipe 250. For enabling deformation of the pipe 250, the width of the first deformation module 120 and the third deformation module 130 is between 1 and pi/2 times the diameter of the pipe 250, preferably between 1,2 and 1,5. In a particularly preferred embodiment, the width of the first deformation module 120 and the third deformation module 130 is between 1,25 and 1,3 times the diameter of the pipe.

More in general, the width of the first deformation module should be more than the length of the shortest line from two points on the inner wall of the conduit to be deformed, which line is to cross a centre of the cross-section of the conduit. This condition holds also for conduits having a cross-section having a non-circular shape.

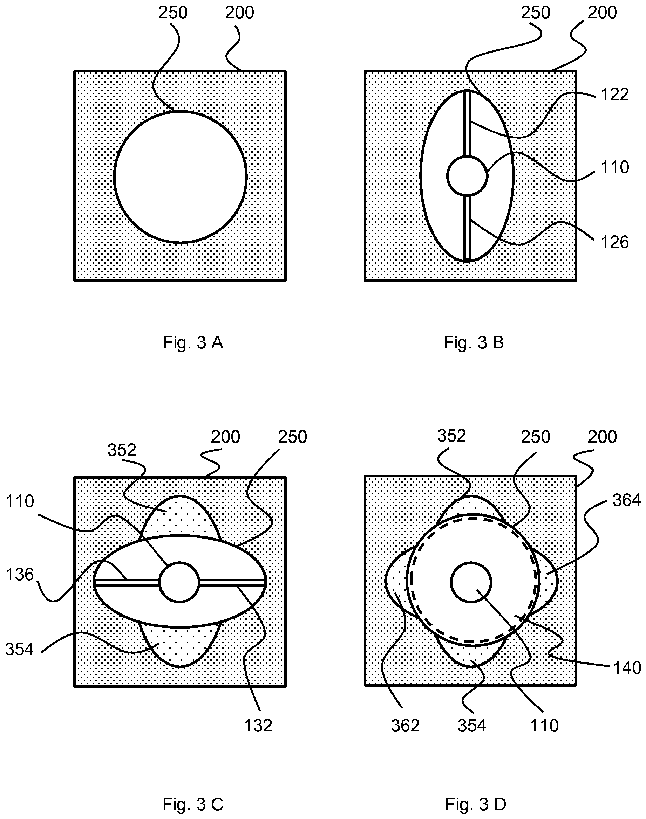

Figure 3 depicts a process of deforming the pipe 250 by means of the deformation tool 100. Referring to Figure 1 and Figure 2, the deformation tool 100 is pulled or pushed through the pipe 250. The connection rod 150 is at a leading end of the tool and the second deformation module 140 is at a trailing end.

Figure 3A shows a cross-section of the pipe 250 in the ground 200. Figure 3B shows a cross-section of the pipe 250 in the ground 200, with the deformation tool 100 inside. The cross-section shown by Figure 3B is taken at a location of the first deformation module 120. The centre axis of the deformation tool 100 preferably coincides with the centre axis of the pipe 250. The rotational deformation members are not shown, but may yet be present when putting this example in practice.

The first wedge 122 exerts a first force on the pipe 250 having a component perpendicular to the central axis of the body 110 and the second wedge 126 exert a second force on the pipe 250 that is perpendicular to the central axis of the body 110 as well. By virtue of the symmetry of the first deformation module 120, the sum of the applied forces, perpendicular to the centre axis of the pipe 250, is substantially zero at the centre axis. This means that the deformation tool 100 may be kept at a stable location, with the centre axis of the pipe 250 at substantially the same position at the centre axis of the deformation tool 100. As the deformation tool 100 is pushed or pulled through the pipe 250, forces exerted on the pipe 250 by the first deformation module will also have components parallel to the centre axis of the pipe 250.

The exerted forces result in a non-destructive deformation of the cross-section of the pipe 250, as depicted by Figure 3B. After the first deformation shown by Figure 3B, the cross-section of the pipe 250 has a substantially elliptical shape.

Preferably, the width of the first deformation module 120 and the third deformation module 130 is chosen such that the cross-section of the pipe 250 is deformed only and not stretched. This means that the circumference of the pipe 250 after a deformation is substantially equal to the initial circumference of the pipe 250. A reason for this preference is that stretching of the diameter of the pipe 250 may result in weak spots in the pipe 250. This, in turn, may result in cracks and/or ruptures in the pipe, which may cause leakage of toxic contaminants in the ground 200. And this should be prevented.

Figure 3C shows a cross-section of the pipe 250 in the ground 200, with the deformation tool 100 inside. The cross-section shown by Figure 3 C is taken at a location of the third deformation module 130. Due to forces exerted by the third wedge 132 and the fourth wedge 136 and due to the third deformation module 130 being skewed 90 degrees to the first deformation module 120, the cross-section of the pipe 250 is deformed again. As with the first deformation module 120, the sum of the applied forces applied by the third deformation module 130, perpendicular to the centre axis of the pipe 250, is substantially zero at the centre axis. This is due to the symmetrical nature of the third deformation module 130.

This second deformation results in an elliptical shape of the cross-section of the pipe 250 as well. The ellipse resulting out of the second deformation is rotated by 90 degrees over the central axis of the pipe 250, relative to the elliptical shape resulting out of the first deformation. Furthermore, as shown by Figure 3C, voids remain at the locations of the lobes of the ellipse that resulted out of the first deformation. Above the pipe 250, a first void 352 is located and below the pipe 250, a second void 354 is located.

After the second deformation, a third deformation is applied by means of the second deformation module 140. This is depicted by Figure 3 D. The conical member 142 of the second deformation module 140 preferably has a diameter substantially equal to or slightly smaller than the diameter of the pipe 250. As a result, the cross-section of the pipe 250 is brought back to its initial shape - or at least nearly brought back to that shape.

With the shape of the cross-section of the pipe 250 back or almost back to its initial shape, additional voids remain at locations where lobes of the second ellipse were located. In particular, a third void 362 and a fourth void 364 remain. In other embodiments, voids are provided all along or along the largest part of the outer wall of the pipe 250 and no specific indistinguishable voids exist around the circumference the pipe.

With voids surrounding the pipe 250 or in any case most of the pipe's outer perimeter, the amount of ground 200 in direct contact with the pipe 250 is significantly less than in the situation depicted by figure 3A. Furthermore, due to the deformations, bonds between the pipe 250 and the ground 200 are broken. Such bonds are usually mechanical bonds due to fluid dynamics in the ground 200 and other forces. However, chemical bonds may be an issue as well and may be broken in the same way. This means that far less frictional forces - shear forces - exist between the outer surface of the pipe 250 and the ground 200. Which means that less force is required for pulling the pipe 250 out of the ground 200.

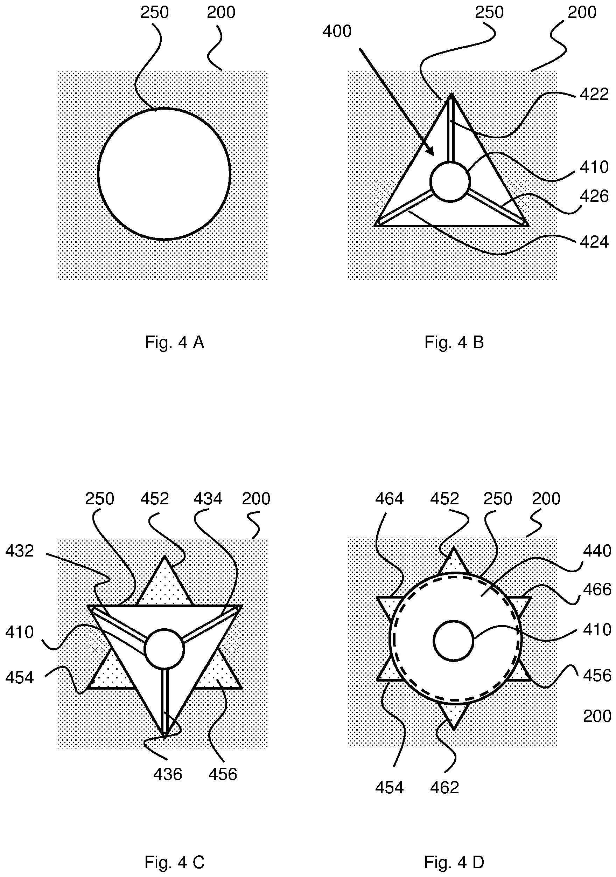

Figure 4 shows another embodiment, using a different tool. Figure 4A shows an initial situation, with the pipe 250 provided in the ground 200. Figure 4B shows a cross-section at a location of a first deformation module. The first deformation module comprises a first protrusion 422, a second protrusion 424 and a third protrusion 426. The three protrusions of the first deformation module are annularly equidistantly spaced apart, at 120 degrees over a centre axis of an elongated body 410 of the tool 400. Pulling of the tool 400 through the pipe 250 results in the cross-section of the pipe 250 being deformed towards a substantially first triangular shape. It will be apparent that in a practical situation, the corners of the triangular shape will not be as sharp as depicted by Figure 4B. Also in this embodiment, the sum of vertical components of forces exerted by the protrusions is zero at the centre axis of the elongated body 410.

Figure 4C shows a cross-section at a location of a third deformation module comprised by the tool 400. Figure 4C shows the third deformation module comprising a fourth protrusion 432, a fifth protrusion 434 and a sixth protrusion 436. Compared to the protrusions of the first deformation module, the protrusions are skewed 60 degrees. Alternatively stated, the third deformation module is a mirrored version of the first deformation module. The deformation established by the third deformation module results in second triangular shape of the cross-section of the pipe 250. The second deformation results in voids where the points of the first triangular shape were located; a first void 452, a second void 454 and a third void 456.

After passage of a second deformation module 440 having a circular shape defining a circle around the central axis of the body 414 as depicted by Figure 4D, the cross-section of the pipe 250 is substantially back to its initial shape as depicted by Figure 4A. Figure 4D also shows additional voids; a fourth void 462, a fifth void 464 and a sixth void 466. With the voids, there is less contact area between the ground 200 and the outer surface of the pipe 250. This results in a reduction of frictional forces between the pipe 250 and the ground 200, which mean less force is required for pulling the pipe 250 out of the ground 200. In other embodiments, voids are provided all along or along the largest part of the outer wall of the pipe 250 and no specific indistinguishable voids exist around the circumference the pipe.

So far, the device according to the first aspect has been discussed having a deformation module comprising two, three or five protrusions. A device having a deformation module comprising four or more than five protrusions may be envisaged as well. The larger the cross-sectional area of the pipe 250, the more protrusions are preferred. In particular for pipes having a very large diameter, up to 1,22 metres (48 inch), a device with a first deformation module having ten or more protrusions may be employed.

In the embodiments discussed so far, pulling the deformation tool 100 at a more or less constant speed through the pipe 250 is discussed. This results in forces exerted by the protrusions or wedges of the deformation modules in directions having components parallel to the centre axis of the deformation tool 100 and perpendicular to the centre axis of the deformation tool 100. Alternatively, a further tool is provided, comprising retractable protrusions. This allows the further tool to be pulled through the pipe 250 without significant force required, with retracted protrusions. At a location in the pipe 250 where deformation is required, the protrusions are expelled from the further tool. This may be done by means of hydraulic, mechanical or pneumatic force. After deformation, the protrusions are retracted and the further tool is moved to the next position where deformation is required.

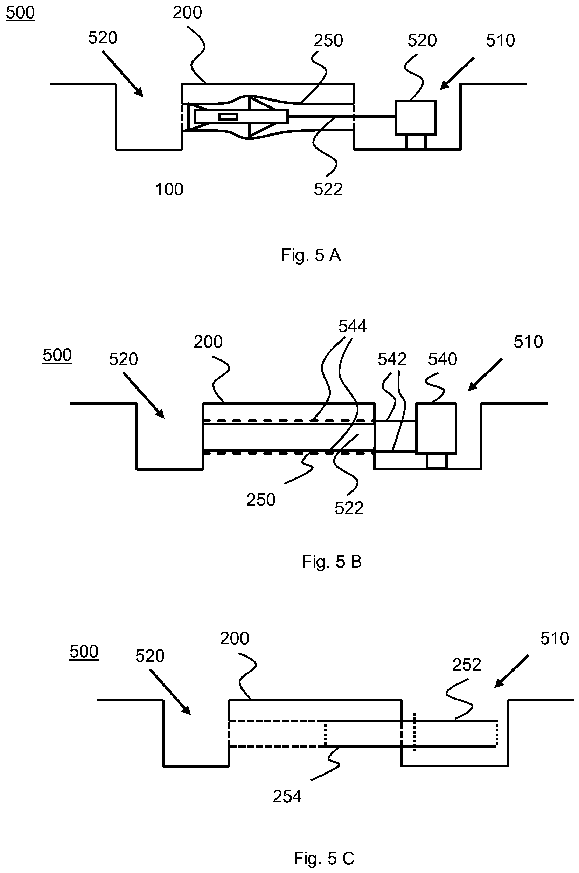

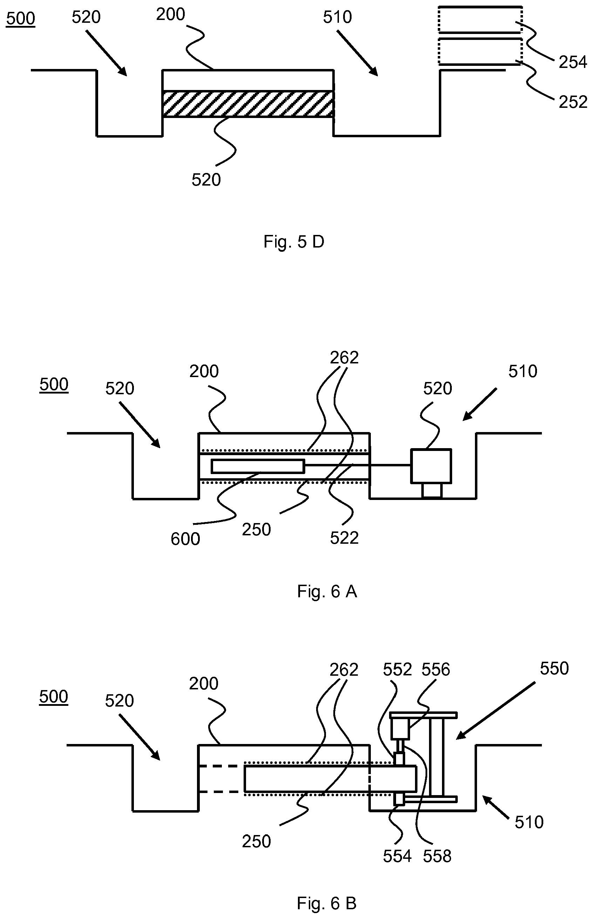

Figure 5 schematically shows application of the deformation tool 100 in a construction site 500 for removing the pipe 250 from the ground 200. Figure 5A shows the pipe 250 in the ground 200. In the ground 200, a first construction pit 510 is provided. In the first construction pit 510, a pulling machine 540 is set up for pulling the deformation tool 100 through the pipe 250. The deformation tool 100 is loaded in the pipe 250 via a second construction pit 520.

Figure 5B shows a lubricant injector 542 being provided in the second construction pit 520. The lubricant injector 542 is provided with two lubricant pipes 544 for injecting a lubricant in voids between the pipe 250 and the ground 200. The lubricant preferably comprises a liquid and water in particular. A bentonite emulsion is particularly preferred, though another suspension of water and small mineral particles may be used as well. With the optional action of providing a lubricant in the voids between the ground 200 and the pipe, less force may be required for pulling the pipe 250 out of the ground 200.

Figure 5C shows the pipe 250 being pulled out of the ground 200. The pipe 250 is pulled out of the ground 200 by means of a pulling device (not shown). This may be a mechanically, hydraulically or pneumatically driven device, or a combination thereof. As the dimensions of the first construction pit 510 are preferably smaller than the length of the pipe 250, the pipe 250 is cut in segments. Figure 5C shows a first segment 252 and a second segment 254.

After the pipe 250 has been removed in full or after the pipe 250 is at least partially withdrawn from the ground 200, a void left by the pipe 250 is filled with a filling material 530 as shown by Figure 5D. The filling material may have a constitution similar to that of the ground 200. Alternatively, the filling material may have a different constitution.

In a preferred embodiment, the pipe 250 is cleaned prior to deforming and removal from the ground 200.

The tools and methods disclosed above may be employed for a wide range of pipe diameters. In practice, for example pipes for transporting gas and natural gas in particular have diameters ranging from 50.8 millimetres (two inch) to 1219.2 millimetres (48 inch). The width of the deformation modules, as depicted by Figure 1, is preferably between 1,25 and 1,3 times the initial diameter of the conduit, as discussed above.

The distance between the various deformation modules may depend on the width of the deformation tool 100 and/or the width of the pipe 250. In a preferred embodiment, intended for a pipe having a diameter of 152,4 millimetres (6 inch), the distance between two deformation modules is preferably 540 millimetres. More generally, the ratio between the width of the deformation modules and the distance between the deformation modules is between 1/2D and 4D, wherein D is the diameter of the pipe 250. Furthermore, the ratio between the width of the deformation modules and the distance between the deformation modules may also depend on the ratio D/t, in which t is the thickness of the wall of the pipe. Preferably, the larger the diameter of the pipe is, the shorter the distance between the deformation modules.

The deformation modules have so far been discussed as comprising wedges, with optional rotating guiding wheels. In another embodiment, the deformation modules are provided as a single body. Such single body may, for example, by provided as an ellipsoid having a shape substantially identical to a desired shape of the cross-section of the pipe 250 after deformation. In yet another alternative, a deformation module comprises a pseudo-conical body. The top of that body points towards the leading end of the tool and the cross-section of the pseudo-conical body has a shape substantially identical to a desired shape of the cross-section of the pipe 250 after deformation. The lobes of the elliptical shape of such deformation module are protrusions that exercise a force on the pipe 250 that results in the deformation. Hence, protrusions comprised by deformation modules may be part of a single body or provided as separate members attached to the elongated main body 100.

Furthermore, whereas deformation by two deformation modules is preferred, followed by a deformation for restoring the initial diameter of the pipe 250, application of the method using a device with only one deformation module for deforming the initial circularly shaped cross-section may be envisaged as well. Alternatively, a device having more than two deformation modules may also be envisaged. In case the deformation provided by the first deformation module 120 is only an elastic deformation, restoration of the shape of the cross-section of the pipe 250 is not required. Within that context, it should be noted that with pipes having a very large diameter, up to 1,22 metres (48 inches), only a relatively small change of the diameter is required for breaking bonds between the outer wall of the pipe and earth or clay surrounding the pipe. Such small change may be effectuated by a small deformation of the diameter of the pipe that is that small the deformation is only an elastic deformation.

Figure 6A shows the pipe 250 in the ground 200. Around the pipe 250, a coating 262 is provided. The coating 262 preferably comprises bitumen or a similar substance. Bitumen is a name for a group of large hydrocarbon compounds, comprising at least one of saturates, saturated hydrocarbons, naphthene aromatics, polar aromatics and asphaltenes.

While laying the pipe 250 in the ground 200, the coating 262 is stuck to the outside of the pipe 250. Over time, the coating 262 may break apart and additionally or alternatively lose adhesion with the pipe 250. When the pipe 250 is removed from the ground 200, the coating 262 may remain in the ground 200. In view of environmental safety, this is not preferred. Therefore, it is preferred to ensure the coating 262 or at least a significant part of the coat 262 is adhered or adhered again to the pipe 250.

Figure 6A also shows a heating tool 600 that is arranged to be moved through the pipe 250 by means of the pulling machine 530 that pulls the heating tool 600 through the pipe 250. In the embodiment shown, the heating tool 600 is provided as a separate tool. In other embodiments, the heating tool 600 is connected to the deformation tool 100. The heating tool 600 may be connected to either the leading end or the trailing end of the deformation tool 100. The heating tool 600 preferably comprises wheels and/or tracks or other guiding elements enabling movement of the heating tool 600 through the pipe 250 with relatively low friction.

The heating tool 600 is arranged for heating the pipe 250. The heating may be provided by providing the heating tool 600 with a burner arranged for oxidising a combustible. Such combustible may comprise methane, propane, butane or a similar hydrocarbon. Alternatively or additionally, electrical heating may be used by providing the heating tool 600 with an electrical heater. Such electrical heater preferably comprises a resistive element that heats up while conducting a current. Alternatively or additionally, a source of infrared radiation may be provided with the heating tool 600.

The heating tool 600 is preferably arranged to heat the pipe 250 such that the bitumen of the coating 262 at least partially melts to such level that it forms itself around the outer wall of the pipe 250 again and preferably adheres at least partially and preferably fully to the outer wall of the pipe 250. With respect to partially melting, it is noted bitumen, also known as asphalt, is a mixture of compounds that may have different melting points. If compounds with a lower melting point melt such that at least a substantial part of the bitumen is liquid, still solid compounds allow the bitumen to flow such that it flows to cover the outer wall of the pipe 250 and sticks to the outer wall of the pipe 250 to form a layer around the pipe 250.

The pipe 250 may be heated by providing thermal energy to the pipe 250, for example by means of electrical heating or providing a flame. Alternatively or additionally, other types of energy may be provided to the pipe 250 to heat up the pipe. Energy may be provided to the pipe 250 as electromagnetic or magnetic energy. This may be established by creating an alternating magnetic field in the pipe 250, providing inductive heating of the pipe 250. It is noted inductive heating is particularly suitable if the pipe 250 comprises conductive materials. Alternatively or additionally, infra-red radiation - electromagnetic radiation in the infra-red spectrum - is radiated from the heating tool to the pipe 250.

The heating tool 600 is pulled or pushed through the pipe 250 at such speed that the pipe 250 is heated to the appropriate level to enable reflow of the bitumen. Preferably, the pipe is heated to a temperature between 80°C and 150°C and more preferably between 90°C and 120°C. In other embodiments, heating is provided in any interval having a lower boundary of 80°C, 85°C, 90°C or 95°C and an upper boundary of 100°C, 105°C, 110°C, 115°C, 120°C, 125°C, 130°C, 140°C or 150°C.

Figure 6B shows a coating removal tool 550 provided in the second construction pit 510. The coating removal tool 550 is in this embodiment used in conjunction with a tool for pulling the pipe 250 out of the ground 200. Alternatively, the coating removal tool 550 is used on segments of the pipe 250 after they have been removed from the ground 200, at another location.

The coating scraping tool 550 comprises a first scraping knife 552 and a second scraping knife 554. The first scraping knife 552 and the second scraping knife 554 are provided around the outer wall of the pipe 250 and preferably such that the two knives close in around the circumference of the pipe 250 or at least around a substantial part thereof. In one embodiment, the two - or more - knives comprise plates in which a cut-out having a circular trajectory is provided. The radius of the circular cut-out is substantially the same as the radius of the outer wall of the pipe 250. This enables the knives to close in onto the outer wall of the pipe 250.

In this embodiment, the first scraping knife 552 is connected to a piston 558 of a hydraulic cylinder 556. The hydraulic cylinder 556 is connected to a yoke of the coating removal tool 550. Also the second scraping knife 554 is connected to the yoke of the coating removal tool 550. The hydraulic cylinder 556 may be actively biased for applying pressure to the outer wall of the pipe 250 by the first knife 552. Alternatively to the hydraulic cylinder, other biasing means like a passive hydraulic cylinder, a pneumatic cylinder, either active or passive, a spring or another biasing suspension module may be used for enabling active and preferably biased enclosure of the pipe by means of two or more knives. In another embodiment, the second scraping knife 554 and/or further knives are also movably connected to the yoke.

With the knives biased towards the pipe 250, the preferably still warm but optionally already cooled down coating 262 around the pipe 250 is scraped off. The coating removal tool 500 preferably allows the removal of the pipe 250 and removal of the coating 262 to be executed in one run. This saves time and may remove need for a post-processing step of removal of the coating.

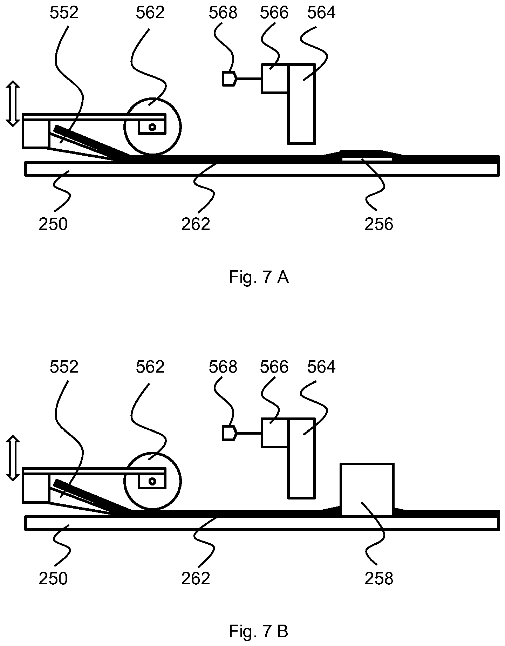

Figure 7A shows a detail of the coating removal tool 550. Figure 7 A shows the first scraping knife 552. Above, a plate-shaped knife with a cut-out having a circular knife circumference was discussed. In that embodiment earlier discussed, the plate-shaped first knife 552 is preferably placed substantially perpendicular to the outer wall of the pipe 250. Figure 7A shows the first scraping knife 552 having a different shape and being placed under an angle relative to the outer wall of the pipe 250. In the embodiment as shown by Figure 7A, the scraping knives preferably together form a truncated cone, with each knife forming a partially circular part from the top to the bottom of the truncated cone. This allows at least most, if not all, of the outer wall of the pipe 250 to be enclosed by the knives.

Figure 7A shows the first knife 552 connected to a detection wheel 562 that functions as a shape following module. The detection wheel 562 is provided such that if a small unevenness is detected, the first scraping knife 552 moves to compensate for the unevenness and preferably continues removing the coating 262 from the unevenness at the outer wall of the pipe 250. In the embodiment shown, this is enabled by providing a substantially rigid connection between the detection wheel 562 and the first scraping knife 552. The first scraping knife 552 and the detection wheel 562 are suspended relative to the pipe 250 to enable a movement of both in a direction having a component perpendicular to the outer wall of the pipe 250.

In another embodiment, movement of the detection wheel 562 is detected by means of a mechanical, an electrical or electronic sensor, another sensor or a combination thereof. In yet another embodiment, the detection wheel 562 also has a cutting function for cutting the coating 262. Optionally and preferably, the point at which the detection wheel 562 touches the outer wall of the pipe 250 coincides with or is just before the location at which the first scraping knife 552 touches the wall of the pipe 250. Preferably each scraping knife is provided with a detection wheel that may optionally perform a cutting function.

The detection generates signal and the signal is used, for example by a microcontroller or other processing unit to move the first scraping knife 552 to move accordingly to follow the outer shape of the pipe 250. Alternatively or additionally to the detection wheel 562, also other detectors may be used, contact and/or contactless, for example by using visible or non-visible light, in a broad spectrum or in a narrow spectrum like with a laser.

Figure 7A shows a weld 256 as a small unevenness at the outer wall of the pipe 250. The weld 256 is small enough an unevenness to be handled by the first knife 552 for removing the coating 262. With the weld 256 approaching the detection wheel 256, the weld 256 is followed by the detection wheel 562. In this embodiment, the detection wheel 562 moves slightly upward upon encountering the weld 256, thereby lifting the first scraping knife 552 with substantially the same amount.

Figure 7B shows the pipe 250 with a nipple 258, for example a venting nipple, as a large unevenness. The nipple 258 is too large to be properly followed by the first scraping knife 552. Furthermore, the nipple 258 may in some embodiments be that large that a pipe segment comprising the nipple 258 cannot handle the applicable pipe segment. Therefore, it is important to detect the nipple 258.

The nipple 258 may be detected as a large unevenness, sticking out from the pipe 250 with more than a pre-determined amount. This may be detected by the detection wheel 562 moving away from the pipe 250 with more than the pre-determined amount. Alternatively or additionally, a detector ring 564 is provided around the pipe 250. The detector ring 564 has an inner diameter that is substantially equal to the outer diameter of the pipe 250 plus two times the pre-determined amount as discussed above. the detector ring 564 is provided concentrically around the pipe 250.

An obstacle sticking out from the pipe 250 with less than the pre-determined amount will pass the detector ring 564 and the nipple 258 will make contact with the detector ring 564. Upon encountering a collision or, more in general, pressure or force, the detector ring 564 will activate the emergency sensor 566 for generating an emergency signal. The emergency signal indicates the pipe 250 has a protrusion that protrudes from the pipe wall with more than the pre-determined amount. The emergency signal is provided to a processing unit like a microprocessor by means of the connector 568. Upon receiving the emergency signal, the microprocessor may stop any actuator that pulls or pushes or otherwise moves the pipe 250.

Whereas application of the deformation tool 100 or similar tools has been discussed in conjunction with conduits having a circular cross-section, application to conduits having a differently shaped cross-section may be envisaged as well.

An aspect relates to deformation of an underground conduit. The cross-sectional shape of the conduit is deformed by enlarging a first cross-sectional dimension of the conduit. Another deformation may be established, at least partially undoing the first deformation and optionally increased a second cross-sectional dimension of the conduit. Yet a further deformation may be established, decreasing the dimension enlarged by previous deformations. Subsequently, the conduit may be removed from the ground. For deformation, a tool is used. The tool is arranged for exercising forces to the inner surface of the conduit, resulting in the increased dimension. The tool may comprise an elongated body and deformation members protruding from the body. The width of the deformation member is larger than the initial diameter of the conduit. At the end of the tool, viewed from the transportation direction of the tool, a further deformation member may be provided for reducing the dimensions. The further deformation member may have a cross-section substantially identical to that of the initial cross-section of the conduit.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. When data is being referred to as audio-visual data, it can represent audio only, video only or still pictures only or a combination thereof, unless specifically indicated otherwise in the description of the embodiments.

In the description above, it will be understood that when an element such as layer, region or substrate is referred to as being "on" or "onto" another element, the element is either directly on the other element, or intervening elements may also be present.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. Device : (100) for establishing a non-destructive deformation of a conduit (250) having a cross-section having a cross-section dimension and an inner surface, the device comprising:
- An elongated body (110) having a body centre axis, a leading end and a trailing end, the body being arranged to be transported through the conduit with the leading end leading; and
- A first deformation module (120) provided at a first position of the body, the first deformation module comprising at least two deformation members (122, 126), protruding from the elongated body and defining a first deformation circle;
wherein the deformation members (122, 126) are arranged for exercising forces to the inner surface of the conduit resulting in non-destructive deformation of the cross-section of the conduit.

2. Device according to claim 1, further comprising a second deformation module (140) provided between the first deformation module and the trailing end, the second deformation module comprising at least one deformation element extending outwardly from the body perpendicular to the centre axis, the deformation element defining a second deformation circle having a circle centre that substantially coincides with the centre axis and having a cross-section smaller than the first deformation circle.

3. Device according to claim 2, further comprising a third deformation module (130) provided between the first deformation module (120) and the second deformation module (140), the third deformation module comprising at least two protrusions (132, 136) defining a third deformation circle having a diameter larger than the cross-section dimension, wherein the protrusions 132, 136) of the third deformation module are skewed over the centre axis relative to the deformation members (122, 126) of the first deformation module.

4. Device according to claim 1, 2 or 3, wherein the deformation members (122, 126) of the first deformation module have a proximal deformation end connected to the body and a distal deformation end provided at a distance from the body, the deformation members being provided annularly and equidistantly spaced apart over the body centre axis.

5. Device according to claim 3, wherein the third deformation module (130) comprises a third deformation member (132) and a fourth deformation member (136), the deformation members having a proximal deformation end connected to the body and a distal deformation end provided at a distance from the body, the deformation members being provided annularly and equidistantly spaced apart over the body centre axis.

6. Device according to claim 4 or 5, wherein at least one of the deformation members (122, 126, 132, 136) is provided with a substantially circular rotation member (124, 128, 134, 138) that is rotatable mounted the distal deformation end of the at least one of the deformation members such that the rotation member extends beyond the distal deformation end, wherein the rotation axis of the rotation member is substantially perpendicular to the centre axis and substantially perpendicular to a line from the centre axis to the distal deformation end.

7. Device according to any of the claims 2 to 6, wherein the second deformation module (140) comprises a conically shaped deformation member (142) having a cone axis that substantially coincides with the body centre axis, wherein the base of the conically shaped deformation member is provided towards the trailing end of the body.

8. Device according to any of the preceding claims, further comprising a heating module (600) for heating the conduit, the heating module being connected to one of the trailing end and the leading end of the device.

9. Method of reducing friction between a conduit (250) and a medium (200) surrounding the conduit, the method comprising:
- Establishing a first deformation of the conduit by applying at least a first force and a second force to the inner surface of the conduit resulting in non-destructive deformation of a cross-section of the conduit, the first force and the second force having a component perpendicular to a centre axis of the conduit, the sum of the applied forces being substantially zero perpendicular to the centre axis;
- Establishing a second deformation of the conduit, thereby at least partially undoing the first deformation.

10. Method according to claim 9, further comprising, after establishing the first deformation, applying a third deformation to the conduit by applying at least a third force and a fourth force having a component perpendicular to the centre axis of the conduit, the sum of the third force and the fourth being substantially zero perpendicular to the centre axis;
Wherein:
- The third force is annularly spaced apart from the first force and the fourth force, relative to the centre axis; and/or
- The fourth force is annularly spaced apart from the first force and the second force, relative to the centre axis.

11. Method according to claim 10, wherein the third force is substantially perpendicular to the first force and the fourth force is substantially perpendicular to the second force.

12. Method according to any of the claims 9 to 11, wherein establishing the second deformation of the conduit comprises bringing the conduit substantially back to its original shape.

13. Method according to any of the claims 9 to 11, further comprising heating of the conduit.

14. Method of removing a conduit from a medium, the method comprising:
- The method according to any of the preceding claims 9 to 13, executed by pushing or pulling a device according to any of the claim 1 to 8 through the conduit; and
- Removing the conduit from the medium by pulling and/or pushing the conduit relative to the medium.

15. Method according to claim 14, further comprising, after executing the method according to any of the preceding claims 9 to 13, providing a lubricant between the medium and the outer wall, the lubricant preferably comprises a colloidal emulsion comprising water and mineral and more preferably comprising bentonite.

## Patentansprüche

1. Vorrichtung (100) zum Herstellen einer zerstörungsfreien Verformung einer Leitung (250) mit einem Querschnitt mit einer Querschnittsabmessung und einer inneren Oberfläche, wobei die Vorrichtung umfasst:
- einen länglichen Körper (110) mit einer Körpermittelachse, einem vorderen Ende und einem hinteren Ende, wobei der Körper so angeordnet ist, dass er mit dem vorderen Ende durch die Leitung transportiert wird; und
- ein erstes Verformungsmodul (120), das an einer ersten Position des Körpers vorgesehen ist, wobei das erste Verformungsmodul wenigstens zwei Verformungselemente (122, 126) umfasst, die aus dem länglichen Körper herausragen und einen ersten Verformungskreis definieren;
wobei die Verformungselemente (122, 126) zum Ausüben von Kräften auf die innere Oberfläche der Leitung angeordnet sind, was zu einer zerstörungsfreien Verformung des Querschnitts der Leitung führt.

2. Vorrichtung nach Anspruch 1, ferner umfassend ein zweites Verformungsmodul (140), das zwischen dem ersten Verformungsmodul und dem hinteren Ende vorgesehen ist, wobei das zweite Verformungsmodul wenigstens ein Verformungselement umfasst, das sich vom Körper senkrecht zur Mittelachse nach außen erstreckt, wobei das Verformungselement einen zweiten Verformungskreis mit einer Kreismitte definiert, der im Wesentlichen mit der Mittelachse zusammenfällt und einen Querschnitt aufweist, der kleiner als der erste Verformungskreis ist.

3. Vorrichtung nach Anspruch 2, ferner umfassend ein drittes Verformungsmodul (130), das zwischen dem ersten Verformungsmodul (120) und dem zweiten Verformungsmodul (140) vorgesehen ist, wobei das dritte Verformungsmodul wenigstens zwei Vorsprünge (132, 136) umfasst, die einen dritten Verformungskreis mit einem Durchmesser größer als die Querschnittsabmessung definieren, wobei die Vorsprünge (132, 136) des dritten Verformungsmoduls relativ zu den Verformungselementen (122, 126) des ersten Verformungsmoduls über die Mittelachse abgeschrägt sind.

4. Vorrichtung nach Anspruch 1, 2 oder 3, wobei die Verformungselemente (122, 126) des ersten Verformungsmoduls ein mit dem Körper verbundenes proximales Verformungsende und ein distales Verformungsende aufweisen, das in einem Abstand vom Körper vorgesehen ist, wobei die Verformungselemente ringförmig und über die Körpermittelachse voneinander äquidistant beabstandet angeordnet sind.

5. Vorrichtung nach Anspruch 3, wobei das dritte Verformungsmodul (130) ein drittes Verformungselement (132) und ein viertes Verformungselement (136) umfasst, wobei die Verformungselemente ein mit dem Körper verbundenes proximales Verformungsende und ein an distales Verformungsende aufweisen, das in einem Abstand vom Körper vorgesehen ist, wobei die Verformungselemente ringförmig und über die Körpermittelachse voneinander äquidistant beabstandet angeordnet sind.

6. Vorrichtung nach Anspruch 4 oder 5, wobei wenigstens eines der Verformungselemente (122, 126, 132, 136) mit einem im Wesentlichen kreisförmigen Rotationselement (124, 128, 134, 138) versehen ist, das am distalen Verformungsende des wenigstens einen der Verformungselemente drehbar montiert ist, so dass sich das Rotationselement über das distale Verformungsende hinaus erstreckt, wobei die Rotationsachse des Rotationselements im Wesentlichen senkrecht zur Mittelachse und im Wesentlichen senkrecht zu einer Linie von der Mittelachse zum distalen Verformungsende ist.

7. Vorrichtung nach einem der Ansprüche 2 bis 6, wobei das zweite Verformungsmodul (140) ein konisch geformtes Verformungselement (142) mit einer Kegelachse umfasst, die im Wesentlichen mit der Körpermittelachse zusammenfällt, wobei die Basis des konisch geformten Verformungselements in Richtung des hinteren Endes des Körpers vorgesehen ist.

8. Vorrichtung nach einem der vorhergehenden Ansprüche, ferner umfassend ein Heizmodul (600) zum Erwärmen der Leitung, wobei das Heizmodul mit einem von dem hinteren Ende und dem vorderen Ende der Vorrichtung verbunden ist.

9. Verfahren zum Verringern der Reibung zwischen einer Leitung (250) und einem Medium (200), das die Leitung umgibt, wobei das Verfahren umfasst:
- Herstellen einer ersten Verformung der Leitung durch Ausüben wenigstens einer ersten Kraft und einer zweiten Kraft auf die innere Oberfläche der Leitung, was zu einer zerstörungsfreien Verformung eines Querschnitts der Leitung führt, wobei die erste Kraft und die zweite Kraft eine Komponente senkrecht zu einer Mittelachse der Leitung aufweisen, wobei die Summe der ausgeübten Kräfte senkrecht zur Mittelachse im Wesentlichen Null ist;
- Herstellen einer zweiten Verformung der Leitung, wodurch die erste Verformung wenigstens teilweise rückgängig gemacht wird.

10. Verfahren nach Anspruch 9, ferner umfassend nach dem Herstellen der ersten Verformung das Ausüben einer dritten Verformung auf die Leitung durch Ausüben wenigstens einer dritten Kraft und einer vierten Kraft mit einer Komponente senkrecht zur Mittelachse der Leitung, wobei die Summe der dritten Kraft und der vierten senkrecht zur Mittelachse im Wesentlichen Null ist;
wobei:
- die dritte Kraft ringförmig von der ersten Kraft und der vierten Kraft relativ zur Mittelachse beabstandet ist; und/oder
- die vierte Kraft ringförmig von der ersten Kraft und der zweiten Kraft relativ zur Mittelachse beabstandet ist.

11. Verfahren nach Anspruch 10, wobei die dritte Kraft im Wesentlichen senkrecht zur ersten Kraft ist und die vierte Kraft im Wesentlichen senkrecht zur zweiten Kraft ist.

12. Verfahren nach einem der Ansprüche 9 bis 11, wobei das Herstellen der zweiten Verformung der Leitung das Bringen der Leitung im Wesentlichen zurück in ihre ursprüngliche Form umfasst.

13. Verfahren nach einem der Ansprüche 9 bis 11, ferner umfassend das Erwärmen der Leitung.

14. Verfahren zum Entfernen einer Leitung von einem Medium, wobei das Verfahren umfasst:
- Verfahren nach einem der vorhergehenden Ansprüche 9 bis 13, ausgeführt durch Drücken oder Ziehen einer Vorrichtung gemäß einem der Ansprüche 1 bis 8 durch die Leitung; und
- Entfernen der Leitung aus dem Medium durch Ziehen und/oder Drücken der Leitung relativ zum Medium.

15. Verfahren nach Anspruch 14, ferner umfassend, nachdem das Verfahren nach einem der vorhergehenden Ansprüche 9 bis 13 ausgeführt wurde und ein Schmiermittel zwischen dem Medium und der Außenwand bereitgestellt wurde, umfasst das Schmiermittel vorzugsweise eine kolloidale Emulsion, umfassend Wasser und Mineral, und bevorzugter umfassend Bentonit.

## Revendications

1. Dispositif (100) pour établir une déformation non destructrice d'un conduit (250) ayant une section transversale ayant une dimension de section transversale et une surface interne, le dispositif comprenant :
- un corps allongé (110) ayant un axe central de corps, une extrémité d'attaque et une extrémité de fuite, le corps étant agencé pour être transporté à travers le conduit avec l'extrémité d'attaque ; et
- un premier module de déformation (120) prévu dans une première position du corps, le premier module de déformation comprenant au moins deux éléments de déformation (122, 126) faisant saillie du corps allongé et définissant un premier cercle de déformation ;
dans lequel les éléments de déformation (122, 126) sont agencés pour exercer des forces sur la surface interne du conduit se traduisant par la déformation non destructrice de la section transversale du conduit.

2. Dispositif selon la revendication 1, comprenant en outre un deuxième module de déformation (140) prévu entre le premier module de déformation et l'extrémité de fuite, le second module de déformation comprenant au moins un élément de déformation s'étendant vers l'extérieur à partir du corps perpendiculaire à l'axe central, l'élément de déformation définissant un deuxième cercle de déformation ayant un centre de cercle qui coïncide sensiblement avec l'axe central et ayant une section transversale inférieure au premier cercle de déformation.

3. Dispositif selon la revendication 2, comprenant en outre un troisième module de déformation (130) prévu entre le premier module de déformation (120) et le deuxième module de déformation (140), le troisième module de déformation comprenant au moins deux saillies (132, 136) définissant un troisième cercle de déformation ayant un diamètre supérieur à la dimension de section transversale, dans lequel les saillies (132, 136) du troisième module de déformation sont obliques sur l'axe central par rapport aux éléments de déformation (122, 126) du premier module de déformation.

4. Dispositif selon la revendication 1, 2 ou 3, dans lequel les éléments de déformation (122, 126) du premier module de déformation ont une extrémité de déformation proximale raccordée au corps et une extrémité de déformation distale prévue à une certaine distance du corps, les éléments de déformation étant prévus de manière annulaire et espacés à équidistance sur l'axe central de corps.

5. Dispositif selon la revendication 3, dans lequel le troisième module de déformation (130) comprend un troisième élément de déformation (132) et un quatrième élément de déformation (136), les éléments de déformation ayant une extrémité de déformation proximale raccordée au corps et une extrémité de déformation distale prévue à une certaine distance du corps, les éléments de déformation étant prévus de manière annulaire et espacés à équidistance sur l'axe central de corps.

6. Dispositif selon la revendication 4 ou 5, dans lequel au moins l'un des éléments de déformation (122, 126, 132, 136) est prévu avec un élément de rotation sensiblement circulaire (124, 128, 134, 138) qui est monté en rotation sur l'extrémité de déformation distale d'au moins l'un des éléments de déformation de sorte que l'élément de rotation s'étend au-delà de l'extrémité de déformation distale, dans lequel l'axe de rotation de l'élément de rotation est sensiblement perpendiculaire à l'axe central et sensiblement perpendiculaire à une ligne allant de l'axe central jusqu'à l'extrémité de déformation distale.

7. Dispositif selon l'une quelconque des revendications 2 à 6, dans lequel le second module de déformation (140) comprend un élément de déformation de forme conique (142) ayant un axe de cône qui coïncide sensiblement avec l'axe central de corps, dans lequel la base de l'élément de déformation de forme conique est prévue vers l'extrémité de fuite du corps.

8. Dispositif selon l'une quelconque des revendications précédentes, comprenant en outre un module de chauffage (600) pour chauffer le conduit, le module de chauffage étant raccordé à l'une parmi l'extrémité de fuite et l'extrémité d'attaque du dispositif.

9. Procédé pour réduire la friction entre un conduit (250) et un milieu (200) entourant le conduit, le procédé comprenant les étapes suivantes :
- établir une première déformation du conduit en appliquant au moins une première force et une seconde force sur la surface interne du conduit se traduisant par une déformation non destructrice d'une section transversale du conduit, la première force et la seconde force ayant un composant perpendiculaire à un axe central du conduit, la somme des forces appliquées étant sensiblement nulle perpendiculairement à l'axe central ;
- établir une deuxième déformation du conduit, annulant ainsi au moins partiellement la première déformation.

10. Procédé selon la revendication 9, comprenant en outre après l'étape pour établir la première déformation, l'étape pour appliquer une troisième déformation sur le conduit en appliquant au moins une troisième forme et une quatrième force ayant un composant perpendiculaire à l'axe central du conduit, la somme de la troisième force et de la quatrième étant sensiblement nulle perpendiculairement à l'axe central ;
dans lequel :
- la troisième force est espacée de manière annulaire de la première force et de la quatrième force, par rapport à l'axe central ; et/ou
- la quatrième force est espacée de manière annulaire de la première force et de la deuxième force, par rapport à l'axe central.

11. Procédé selon la revendication 10, dans lequel la troisième force est sensiblement perpendiculaire à la première force et la quatrième force est sensiblement perpendiculaire à la deuxième force.

12. Procédé selon l'une quelconque des revendications 9 à 11, dans lequel l'étape pour établir la deuxième déformation du conduit comprend l'étape pour ramener le conduit sensiblement à sa forme d'origine.

13. Procédé selon l'une quelconque des revendications 9 à 11, comprenant en outre l'étape pour chauffer le conduit.

14. Procédé pour retirer un conduit d'un milieu, le procédé comprenant :
- le procédé selon l'une quelconque des revendications 9 à 13, exécuté en poussant ou en tirant un dispositif selon l'une quelconque des revendications 1 à 8 à travers le conduit ; et
- l'étape pour retirer le conduit du milieu en tirant et/ou en poussant le conduit par rapport au milieu.

15. Procédé selon la revendication 14, comprenant en outre, après l'étape pour exécuter le procédé selon l'une quelconque des revendications 9 à 13, l'étape pour prévoir un lubrifiant entre le milieu et la paroi externe, le lubrifiant comprend de préférence une émulsion colloïdale comprenant de l'eau et un minéral et encore de préférence comprenant de la bentonite.
